# EUROPEAN PATENT APPLICATION

(11) **EP 4 660 914 A1**
(43) Date of publication of application: **10.12.2025**
(21) Application number: 24749689.6
(22) Date of filing: 30.01.2024
(51) Int. Cl.: G06Q 20/06

(54) **TRANSACTION METHOD AND APPARATUS, DEVICE AND STORAGE MEDIUM**

(30) Priority: 31.01.2023 CN 202310106296
(71) Applicant: Digital Currency Institute, The People's Bank of China, Beijing 100073 (CN)
(72) Inventor: MU, Changchun, Beijing 100071 (CN); DI, Gang, Beijing 100071 (CN); LYU, Yuan, Beijing 100071 (CN); QIAN, Youcai, Beijing 100071 (CN); SU, Lin, Beijing 100071 (CN); CHEN, Xiaoming, Beijing 100071 (CN)
(74) Representative: Detken, Andreas
(86) International application number: PCT/CN2024/074774
(87) International publication number: WO 2024/160210

(57) **Abstract**

A transaction method, comprising: a transaction initiator node (11) sends transaction request information of a current transaction to a blockchain, the transaction request information being used for requesting to confirm whether a transaction receiver node (12) agrees to perform the current transaction; the transaction initiator node (11) acquires, from the blockchain, transaction response information sent by the transaction receiver node (12), and when the transaction response information indicates that the transaction receiver node (12) agrees to the current transaction, calls a smart contract on the blockchain, and executes the current transaction to generate a first synchronous transaction event, the first synchronous transaction event being used for indicating that the transaction initiator node (11) has executed the current transaction; and when it is determined that the transaction receiver node (12) has called the smart contract on the blockchain and executed the current transaction to generate a second synchronous transaction event, determining that the current transaction is completed, the second synchronous transaction event being used for indicating that the transaction receiver node (12) has executed the current transaction.

## Description

The present application claims the priority to Chinese Patent application No. 202310106296.4, titled "TRANSACTION METHOD AND APPARATUS, DEVICE, AND STORAGE MEDIUM", filed on January 31, 2023, with the China National Intellectual Property Administration, which is incorporated herein by reference in its entirety.

### FIELD

The present disclosure relates to the technical field of blockchains, and in particular to a transaction method, a transaction apparatus, a device, and a storage medium.

### BACKGROUND

Currently, cross-border payment is conducted in an agency-based mode and centralized. One or more correspondent banks participate in the payment, and transactions are completed using some intermediate third-party system.

In the agency-based mode, one party participating in the transaction may have fulfilled its obligations while the other party has not due to, for example, time differences between an originating bank, a beneficiary bank, and the correspondent bank, or the correspondent bank being on bank holidays. That is, the settlement lag results in asynchronous transactions.

### SUMMARY

In a first aspect, a transaction method is provided according to embodiments of the present disclosure. The transaction method is applicable to a transaction initiator node and comprises: transmitting, by the transaction initiator node, a transaction request for a current transaction to a blockchain, where the transaction request is for soliciting confirmation on whether a transaction recipient node agrees to execute the current transaction; obtaining, by the transaction initiator node from the blockchain, a transaction response transmitted by the transaction recipient node; invoking, by the transaction initiator node, a smart contract on the blockchain to execute the current transaction and generate a first transaction event, in response to the transaction response indicating that the transaction recipient node agrees to execute the current transaction, where the first transaction event indicates that the transaction initiator node has invoked the smart contract to execute the current transaction; and determining, by the transaction initiator node, that the current transaction is completed, in response to determining that a second transaction event is generated, where the second transaction event is generated by the transaction recipient node through invoking the smart contract on the blockchain to execute the current transaction, and the second transaction event indicates that the transaction recipient node has invoked the smart contract to execute the current transaction.

In some embodiments, the transaction request comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node. Transmitting, by the transaction initiator node, the transaction request for the current transaction to the blockchain comprises: obtaining, by the transaction initiator node, a public key of the transaction recipient node; encrypting, by the transaction initiator node, the transaction request using the public key of the transaction recipient node; and transmitting, by the transaction initiator node, the encrypted transaction request to the blockchain.

In some embodiments, the first account address of the transaction initiator node is calculated through a pseudonymization algorithm.

In some embodiments, the transaction response comprises at least one of: the first account address, a third account address of the transaction recipient node, the first transaction amount, the second transaction amount, the first currency, or the second currency. The transaction response is transmitted to the blockchain from the transaction recipient node after being encrypted by the transaction recipient node using a public key of the transaction initiator node.

In some embodiments, the third account address of the transaction recipient node is calculated through a pseudonymization algorithm.

In some embodiments, the transaction method further comprises: obtaining, by the transaction initiator node from the blockchain, the transaction response transmitted by the transaction recipient node; and decrypting, by the transaction initiator node, the transaction response using a private key of the transaction initiator node to determine whether the transaction recipient node agrees to execute the current transaction.

In some embodiments, invoking, by the transaction initiator node, the smart contract on the blockchain to execute the current transaction and generate the first transaction event comprises: transmitting, by the transaction initiator node, a first transaction message to the blockchain; and invoking, by the transaction initiator node, the smart contract on the blockchain to execute the current transaction to generate the first transaction event. The first transaction message comprises content of the current transaction, the content is encrypted using a public key of a supervisor node, and the transaction initiator node transmits the first transaction message to the blockchain to enable the supervisor node to query or store the first transaction message.

In some embodiments, transmitting, by the transaction initiator node, the first transaction message to the blockchain and invoking, by the transaction initiator node, the smart contract on the blockchain to execute the current transaction and generate the first transaction event comprises: performing, by the transaction initiator node, compliance verification on the first transaction message using the smart contract and a zero-knowledge circuit; and generating, by the transaction initiator node, the first transaction event in response to the first transaction message passing the compliance verification.

In a second aspect, a transaction method is provided according to embodiments of the present disclosure. The transaction method is appliable to a transaction recipient node and comprises: obtaining, by the transaction recipient node from a blockchain, a transaction request transmitted by a transaction initiator node, where the transaction request is for soliciting confirmation on whether the transaction recipient node agrees to execute a current transaction; transmitting, by the transaction recipient node, a transaction response to the blockchain, in response to the transaction recipient node agreeing to execute the current transaction, where the transaction response; receiving, by the transaction recipient node, a first transaction event, where the first transaction event is generated by the transaction initiator node in response to the transaction response through invoking a smart contract on the blockchain to execute the current transaction, and the first transaction event indicates that the transaction initiator node has invoked the smart contract to execute the current transaction; and invoking, by the transaction recipient node, the smart contract on the blockchain to execute the current transaction and generate a second transaction event, where the second transaction event indicates that the transaction recipient node has invoked the smart contract to execute the current transaction.

In some embodiments, the transaction method further comprises: decrypting, by the transaction recipient node, the transaction request using a private key of the transaction recipient node to obtain content of the current transaction, where the content of the current transaction comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node; checking, by the transaction recipient node, whether the content of the current transaction is correct; generating, by the transaction recipient node, the transaction response in response to the content of the current transaction being correct, where the transaction response indicates that the transaction recipient node agrees to execute the current transaction; and transmitting, by the transaction recipient node, the transaction response to the blockchain.

In some embodiments, the first account address of the transaction initiator node is calculated through a pseudonymization algorithm.

In some embodiments, the transaction response comprises at least one of: the first account address, a third account address of the transaction recipient node, the first transaction amount, the second transaction amount, the first currency, or the second currency. Transmitting, by the transaction recipient node, the transaction response to the blockchain comprises: encrypting, by the transaction recipient node, the transaction response using a public key of the transaction initiator node; and transmitting, by the transaction recipient node, the encrypted transaction response to the blockchain.

In some embodiments, the third account address of the transaction recipient node is calculated through a pseudonymization algorithm.

In some embodiments, invoking, by the transaction recipient node, the smart contract on the blockchain to execute the current transaction and generate the second transaction event comprises: transmitting, by the transaction recipient node, a second transaction message to the blockchain; and invoking, by the transaction recipient node, the smart contract on the blockchain to execute the current transaction and generate the second transaction event. The second transaction message comprises content of the current transaction, and the content is encrypted using a public key of a supervisor node. The transaction recipient node transmits the second transaction message to the blockchain to enable the supervisor node to query or store the second transaction message.

In some embodiments, transmitting, by the transaction recipient node, the second transaction message to the blockchain and invoking, by the transaction recipient node, the smart contract on the blockchain to execute the current transaction and generate the second transaction event comprises: performing, by the transaction recipient node, compliance verification on the second transaction message using the smart contract and a zero-knowledge circuit; and generating, by the transaction recipient node, the second transaction event in response to the second transaction message passing the compliance verification.

In a third aspect, a transaction method is provided according to embodiments of the present disclosure. The transaction method is applicable to a blockchain transaction system and comprises: transmitting, by the transaction initiator node, a transaction request for a current transaction to a blockchain, where the transaction request is for soliciting confirmation on whether a transaction recipient node agrees to execute the current transaction; obtaining, by the transaction recipient node, the transaction request from the blockchain; transmitting, by the transaction recipient node, a transaction response to the blockchain in response to the transaction recipient node agreeing to execute the current transaction; obtaining, by the transaction initiator node, the transaction response from the blockchain; invoking, by the transaction initiator node in response to the transaction response indicating that the transaction recipient node agrees to execute the current transaction, a smart contract on the blockchain to execute the current transaction and generate a first transaction event, where the first transaction event indicates that the transaction initiator node has invoked the smart contract to execute the current transaction; receiving, by the transaction recipient node, the first transaction event; and invoking, by the transaction recipient node, the smart contract on the blockchain to execute the current transaction and generate a second transaction event, where the second transaction event indicates that the transaction recipient node has invoked the smart contract to execute the current transaction.

In some embodiments, the transaction method further comprises: executing, by the blockchain transaction system, the smart contract to perform synchronous transaction between a first account address of the transaction initiator node and a third account address of the transaction recipient node, where the synchronous transaction comprises transferring first currency of a first transaction amount to the third account address and transferring second currency of a second transaction amount to the first account address.

In a fourth aspect, a transaction apparatus is provided according to embodiments of the present disclosure. The transaction apparatus is applicable to a transaction initiator node and comprises: a transmitting unit, configured for transmitting a transaction request for a current transaction to a blockchain, where the transaction request is for soliciting confirmation on whether a transaction recipient node agrees to execute the current transaction; a processing unit, configured for obtaining a transaction response transmitted by the transaction recipient node and, in response to the transaction response indicating that the transaction recipient node agrees to execute the current transaction, invoking a smart contract on the blockchain to execute the current transaction and generate a first transaction event, where the first transaction event indicates that the transaction initiator node has invoked the smart contract to execute the current transaction; and a determining unit, configured for determining that the current transaction is completed, in response to determining that a second transaction event is generated, where the second transaction event is generated by the transaction recipient node through invoking the smart contract on the blockchain to execute the current transaction, and the second transaction event indicates that the transaction recipient node has invoked the smart contract to execute the current transaction.

In some embodiments, the transaction request comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node. The transmitting unit is configured for: obtaining a public key of the transaction recipient node; and encrypting, by the transaction initiator node, the transaction request using the public key of the transaction recipient node; and transmitting, by the transaction initiator node, the encrypted transaction request to the blockchain.

In some embodiments, the first account address of the transaction initiator node is calculated through a pseudonymization algorithm.

In some embodiments, the transaction response comprises at least one of: the first account address, a third account address of the transaction recipient node, the first transaction amount, the second transaction amount, the first currency, or the second currency. The transaction response is transmitted to the blockchain from the transaction recipient node after being encrypted by the transaction recipient node using a public key of the transaction initiator node.

In some embodiments, the third account address of the transaction recipient node is calculated through a pseudonymization algorithm.

In some embodiments, the processing unit is further configured for: obtaining, from the blockchain, the transaction response transmitted by the transaction recipient node; and decrypting the transaction response using a private key of the transaction initiator node to determine whether the transaction recipient node agrees to execute the current transaction.

In some embodiments, the processing unit is configured for: transmitting a first transaction message to the blockchain; and invoking the smart contract on the blockchain to execute the current transaction and generate the first transaction event. The first transaction message comprises content of the current transaction, the content is encrypted using a public key of a supervisor node, and the transaction initiator node transmits the first transaction message to the blockchain to enable the supervisor node to query or store the first transaction message.

In some embodiments, the processing unit is configured for: performing compliance verification on the first transaction message using the smart contract and a zero-knowledge circuit; and generating the first transaction event in response to the first transaction message passing the compliance verification.

In a fifth aspect, a transaction apparatus is provided according to embodiments of the present disclosure. The transaction apparatus is appliable to a transaction recipient node and comprises: an obtaining unit, configured for obtaining, from a blockchain, a transaction request transmitted by a transaction initiator node, where the transaction request is for soliciting confirmation on whether the transaction recipient node agrees to execute a current transaction; a transmitting unit, configured for transmitting a transaction response to the blockchain, in response to the transaction recipient node agreeing to execute the current transaction, where the obtaining unit is further configured for receiving first transaction event, the first transaction event is generated by the transaction initiator node in response to the transaction response through invoking a smart contract on the blockchain to execute the current transaction, and the first transaction event indicates that the transaction initiator node has invoked the smart contract to execute the current transaction; and a processing unit, configured for invoking the smart contract on the blockchain to execute the current transaction and generate a second transaction event, where the second transaction event indicates that the transaction recipient node has invoked the smart contract to execute the current transaction.

In some embodiments, the processing unit is further configured for: decrypting the transaction request using a private key of the transaction recipient node to obtain content of the current transaction, where the content of the current transaction comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node; checking whether the content of the current transaction is correct; generating the transaction response in response to the content of the current transaction being correct, where the transaction response indicates that the transaction recipient node agrees to execute the current transaction; and transmitting the transaction response to the blockchain.

In some embodiments, the first account address of the transaction initiator node is calculated through a pseudonymization algorithm.

In some embodiments, the transaction response comprises at least one of: the first account address, a third account address of the transaction recipient node, the first transaction amount, the second transaction amount, the first currency of the transaction initiator node, or the second currency. The transmitting unit is configured for: encrypting the transaction response using a public key of the transaction initiator node; and transmitting the encrypted transaction response to the blockchain.

In some embodiments, the third account address of the transaction recipient node is calculated through a pseudonymization algorithm.

In some embodiments, the processing unit is configured for: transmitting a second transaction message to the blockchain; and invoking the smart contract on the blockchain to execute the current transaction and generate the second transaction event. The second transaction message comprises content of the current transaction, and the content is encrypted using a public key of a supervisor node. The transaction recipient node transmits the second transaction message to the blockchain to enable the supervisor node to query or store the second transaction message.

In some embodiments, the processing unit is configured for: performing compliance verification on the second transaction message using the smart contract and a zero-knowledge circuit; and generating the second transaction event in response to the second transaction message passing the compliance verification.

In a sixth aspect, an electronic device is provided according to embodiments of the present disclosure. The electronic device comprises a processor and a memory, where the memory is configured for store instructions executable by the processor, and the processor is configured for executing the instructions to implement any transaction method in the first aspect.

In a seventh aspect, a computer-readable storage medium is provided according to embodiments of the present disclosure. When computer-executable instructions stored in the computer-readable storage medium are executed by a processor of an electronic device, the electronic device implements any transaction method in the first aspect.

In an eighth aspect, a computer program product is provided according to embodiments of the present disclosure. The computer program product comprises computer instructions. When the computer instructions are executed by an electronic device, the electronic device implements any transaction method in the first aspect.

The foregoing general description and detailed description as follows are only illustrative and explanatory and are not intended for limiting the present disclosure.

### BRIEF DESCRIPTION OF THE DRAWINGS

Drawings provided herein are incorporated as a part of the specification. The drawings illustrate embodiments of the present disclosure and illustrate a principle of the present disclosure in conjunction with description. The drawings shall not be construed as undue limitations to the present disclosure.
FIG. 1 illustrates a schematic structural diagram of a blockchain transaction system according to an embodiment of the present disclosure.
FIG. 2 illustrates a system architecture diagram of a transaction node according to an embodiment of the present disclosure.
FIG. 3 illustrates a flowchart of a transaction method according to an embodiment of the present disclosure.
FIG. 4 illustrates a flowchart of transaction inquiry according to an embodiment of the present disclosure.
FIG. 5 illustrates a flowchart of transaction responding according to an embodiment of the present disclosure.
FIG. 6 illustrates a flowchart of a payment-vs-payment (PVP) transaction according to an embodiment of the present disclosure.
FIG. 7 illustrates a flowchart of a PVP transaction according to another embodiment of the present disclosure.
FIG. 8 illustrates a flowchart of PVP transaction supervision according to an embodiment of the present disclosure.
FIG. 9 illustrates a flowchart of synchronized settlement according to an embodiment of the present disclosure.
FIG. 10 illustrates a schematic structural diagram of a transaction apparatus according to an embodiment of the present disclosure.
FIG. 11 illustrates a schematic structural diagram of a transaction apparatus according to another embodiment of the present disclosure.
FIG. 12 illustrates a schematic structural diagram of an electronic device according to another embodiment of the present disclosure.

### DETAILED DESCRIPTION

Hereinafter technical solutions in embodiments of the present disclosure are clearly and thoroughly illustrated in conjunction with the drawing to help those skilled in the art understand the technical solutions.

Terms such as "first", "second", and the like in description, claims, and drawings of the present disclosure are only intended for distinguishing similar objects rather than indicating a particular sequence. Objects modified by these terms may be exchanged where appropriate, such that embodiments may be implemented according to an order other than the one as depicted or described herein. Implementations described in embodiments do not represent all implementations consistent with the present disclosure. On the contrary, they are merely examples of devices and methods, which are defined in the claims and are consistent with some aspects of the present disclosure.

Herein the symbol "/" means "or" unless otherwise indicated. For example, "A/B" may represent A or B. The term "and/or" describes an association between objects and indicates possibilities of three relationships. For example, "A and/or B" indicates three cases: only A exists, both A and B exist, and only B exists. Herein the term "multiple" refers to two or more.

Some technical terms and techniques related to embodiments of the present disclosure are introduced first before illustrating the embodiments in detail.

A blockchain refers to a chain formed by a sequence of interconnected data blocks. Each data block stores a certain amount of information, and the blocks are connected into a chain according to a chronological order with respect to their generation time. The chain is stored on all servers, and the whole blockchain is secure as long as at least one server in the entire system can work. These servers are called nodes in the blockchain system, and they provide storage space and computing capabilities to support the blockchain system. A modification to information in the blockchain requires consent of more than half of the nodes, and the modification would be synchronized among all nodes. Since the nodes are usually operated by different parties, it is extremely to tamper with the information in the blockchain. Compared with a traditional network, a blockchain has two core features: difficult data tampering and decentralization. The two features render the information recorded in the blockchain more authentic and reliable, and hence the blockchain may address the distrust among different parties.

Global foreign exchange market operates around the clock. Due to differences in The operating hours of payment systems in different regions are different, and hence there is a risk that one party fulfils its obligations in a transaction while the other party is incapable to deliver the currency used for compensation or offset due to, for example, bankrupt. The risk is notorious as the Herstatt risk.

Hence, there is an urgent need for a transaction method that can address the issue of asynchronous transactions and reduces the Herstatt risk.

A transaction method is provided according to an embodiment of the present disclosure. Payment-vs-payment (PVP) mechanism is established to ensure the transaction is settled for both parties at the same time. Accordingly, a risk of settlement lag across different time zones is reduced, and operation efficiency of the foreign exchange market is improved.

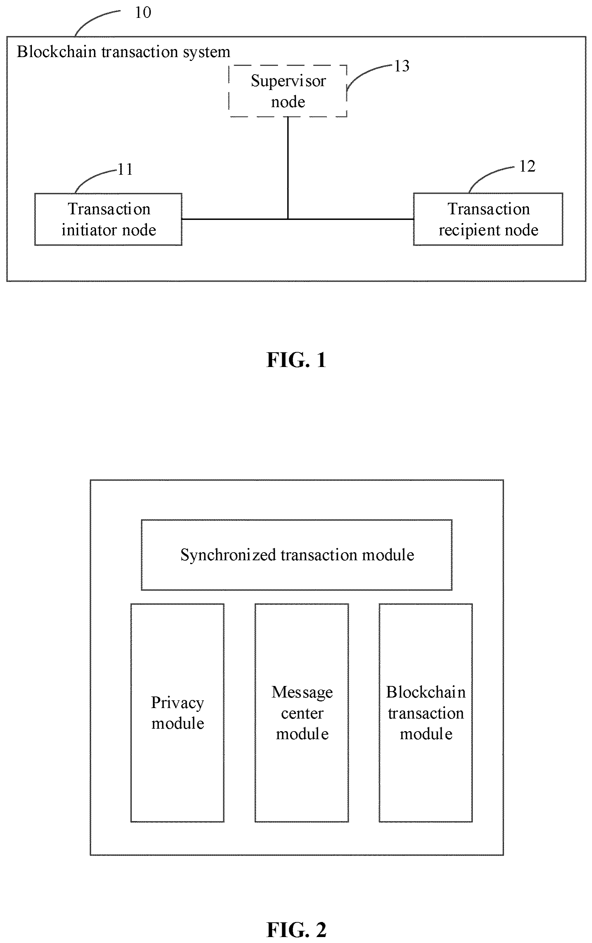

The transaction method provided herein is applicable to a blockchain transaction system. FIG. 1 illustrates a schematic structural diagram of a blockchain transaction system. As shown in FIG. 1, the blockchain transaction system 10 comprises a transaction initiator node 11 and a transaction recipient node 12. The transaction initiator node 11 and the transaction recipient node 12 may be connected in a wired or wireless manner, which is not specifically limited herein.

Each of the transaction initiator node 11 and the transaction recipient node 12 may be an arbitrary node in the blockchain transaction system 10. The transaction initiator node 11 may be a server in the financial field, such as a bank server, or a server cluster comprising multiple servers, which is not specifically limited herein. The transaction recipient node 12 may be another server in the financial field, such as another bank server, or another server cluster comprising multiple servers, which is not specifically limited herein.

Reference is made to FIG. 2. In some embodiments, the transaction initiator node 11 and the transaction recipient node 12 are independent blockchain nodes, and each comprise a synchronous transaction module (PVP), a privacy module (Privacy), a message center module (Message), and a chain transaction module (Keel). The PVP transaction module is configured for generating information associated with a transaction, the privacy module is configured for encrypting various messages, the message center module is configured for monitoring messages in the blockchain, and the chain transaction module is configured for transmitting the information associated with the transaction to other blockchain nodes.

In some embodiments of the present disclosure, the blockchain transaction system 10 further comprises a supervisor node 13. The supervisor node 13 may be any blockchain node in the blockchain transaction system 10. For example, the supervisor node 13 may be a server operated by a supervisor. The supervisor may be a supervisor of the transaction initiator node 11 or a supervisor of the transaction recipient node 12.

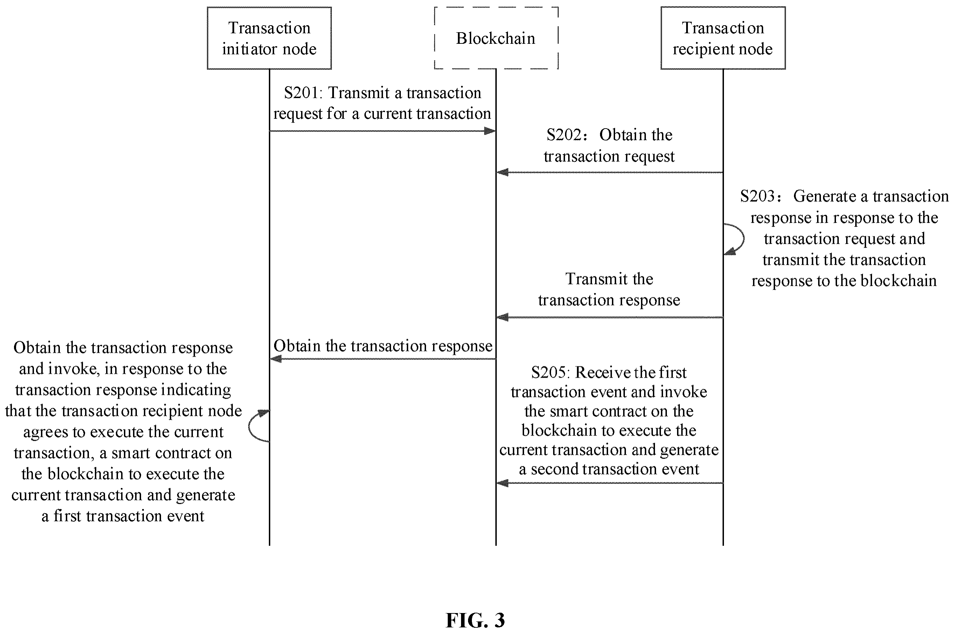

FIG. 3 illustrates a flowchart of a transaction method according to an embodiment of the present disclosure. In some embodiments, the transaction method is applicable to the blockchain transaction system as shown in FIG. 1 or another similar system.

As shown in FIG. 3, the transaction method comprises following steps S201 to S205.

In step S201, the transaction initiator node transmits a transaction request for a current transaction to a blockchain.

The transaction request is for soliciting confirmation on whether the transaction recipient node agrees to execute the current transaction.

In an embodiment, after the transaction initiator node determines that it will initiate the transaction with the transaction recipient node, the transaction initiator node transmits the transaction request for the current transaction to the blockchain.

The transaction request may be transmitted as an inquiry message. Content of the transaction request may comprise at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node.

For the sake of account privacy, the first account address may be a single-use pseudonymous address that is encrypted by the transaction initiator node using its privacy module. The single-use pseudonymous address is calculated through a pseudonymization algorithm.

In an embodiment, the transaction initiator node obtains a public key of the transaction recipient node and encrypts the transaction request using the public key of the transaction recipient node. Afterwards, the transaction initiator node transmits the encrypted transaction request to the blockchain.

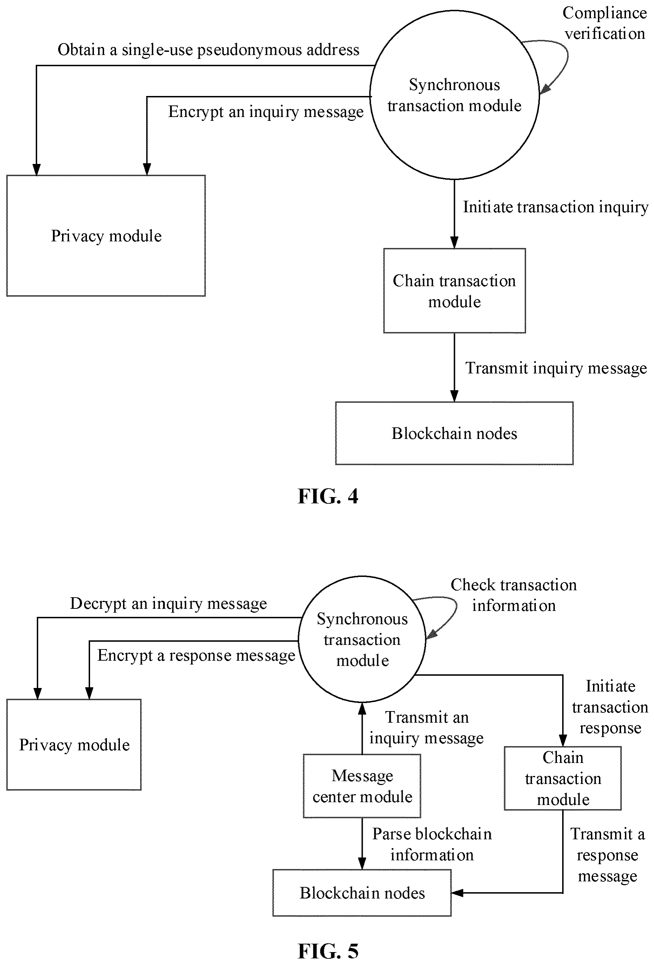

Reference is made to FIG. 4, which shows a process of transaction inquiry performed by the transaction initiator node. As an example, before the transaction initiator node determines that it would initiate the transaction with the transaction recipient node, it performs compliance verification on itself using its synchronous transaction module. The compliance verification checks, for example, whether the transaction complies with a limit on the transaction amount, whether a wallet limit is satisfied after the transaction completes, and whether the transaction recipient node passes a risk verification. Then, the transaction initiator node obtains the single-use pseudonymous address for the current transaction using its privacy module and encrypts the transaction request using an on-chain initial public key of the transaction recipient node. Afterwards, the transaction initiator node transmits the encrypted transaction request to the blockchain using its chain transaction module.

In step S202, the transaction recipient node obtains, from the blockchain, the transaction request transmitted by the transaction initiator node.

In an embodiment, the transaction recipient node obtains the transaction request from the blockchain using its message center module.

The transaction recipient node monitors blocks in the blockchain using its message center module. When a new block is added into the blockchain, the transaction recipient node obtains and parses information in the newly added block.

In an embodiment, the transaction recipient node parses the newly added block using its private key. That is, when the newly added block is encrypted using the public key of the transaction recipient node, the transaction recipient node is capable to parse the newly added block successfully to obtain the content of the block.

As an example, the transaction initiator node encrypts the transaction request using the public key of the transaction recipient node and transmits the encrypted transaction request to the blockchain. Thus, the transaction recipient node is capable parse the transaction request successfully after obtaining the transaction request from the blockchain. Thereby, the transaction recipient node learns the first account address of the transaction initiator node, the second account address of the transaction recipient node, the first transaction amount transferred from the account address of the transaction initiator node, the second transaction amount transferred from the account address of the transaction recipient node, the first currency utilized by the transaction initiator node, and the second currency utilized by the transaction recipient node.

In step S203, the transaction recipient node generates a transaction response in response to the transaction request and transmits the transaction response to the blockchain.

In an embodiment, the transaction recipient node decrypts the transaction request to obtain content of the current transaction and then checks whether the content is correct. When the content is determined to be correct, the transaction recipient node may generate the transaction response, which indicates that the transaction recipient node agrees to execute the current transaction, and transmit the transaction response to the blockchain. When the content is determined to be incorrect, the transaction recipient node may generate the transaction response, which indicates that the transaction recipient node rejects to execute the current transaction, and transmit the transaction response to the blockchain.

As an example, the transaction recipient node checks the amount of the two parties and the currency of the two parties in the transaction request, checks an exchange rate between the two currencies, and obtains the account address of the transaction initiator node from the transaction request. When determining that the above information is available and correct, the transaction recipient node generates a response message indicating that it agrees to execute the transaction.

The transaction response comprises at least one of: the first account address of the transaction initiator node, a third account address of the transaction recipient node, the first transaction amount transferred from the account address of the transaction initiator node, the second transaction amount transferred from the account address of the transaction recipient node, the first currency utilized by the transaction initiator node, and the second currency utilized by the transaction recipient node.

For the sake of account privacy, the third account address may be a single-use pseudonymous address encrypted by the transaction recipient node using its privacy module. The single-use pseudonymous address is calculated through a pseudonymization algorithm.

In some embodiments, when the transaction recipient node agrees to execute the current transaction, the transaction recipient node transmitting the transaction response to the blockchain comprises following sub-steps. The transaction recipient node encrypts the transaction response using the public key of the transaction initiator node. The transaction recipient node transmits the encrypted transaction response to the blockchain.

Reference is made to FIG. 5, which shows a process of transaction responding performed by the transaction recipient node. As an example, the transaction recipient node parses the blockchain information using its message center module to obtain the transaction request and transmits the transaction request to its synchronous transaction module. The synchronous transaction module decrypts the transaction request using the private key of the transaction recipient node and checks whether the content of the transaction request is correct. When the content is determined to be correct, the synchronous transaction module generates a response message (that is, the transaction response) indicating consent on the transaction, encrypts the response message with a public key of the target transaction object using its privacy module, and transmits the encrypted response message to the blockchain using its chain transaction module.

In step S204, the transaction initiator node obtains, from the blockchain, the transaction response transmitted by the transaction recipient node, and in response to the transaction response indicating that the transaction recipient node agrees the current transaction, the transaction initiator node invokes a smart contract on the blockchain to execute the current transaction and generate a first transaction event.

The first transaction event indicates that the transaction initiator node has invoked the smart contract to execute the current transaction.

In an embodiment, the transaction initiator node obtains the transaction response from the blockchain and decrypts the transaction response using its private key to determine whether the transaction recipient node agrees to execute the current transaction. When the transaction response indicates that the transaction recipient node agrees to execute the current transaction, the transaction initiator node may transmit a first transaction message to the blockchain and invoke the smart contract to execute the current transaction. Thereby, the first transaction event is generated. The first transaction message comprises the content of the current transaction, where the content is encrypted using a public key of a supervisor.

In some embodiments, the transaction initiator node transmitting the first transaction message to the blockchain and invoking the smart contract on the blockchain to execute the current transaction and generate the first transaction event comprises following sub-steps. The transaction initiator node performs compliance verification on the first transaction message

(e.g., on the transaction amount of both parties, an exchange rate, or the like) using the smart contract and a zero-knowledge circuit. The transaction initiator node generates the first transaction event when the first transaction message passes the compliance verification.

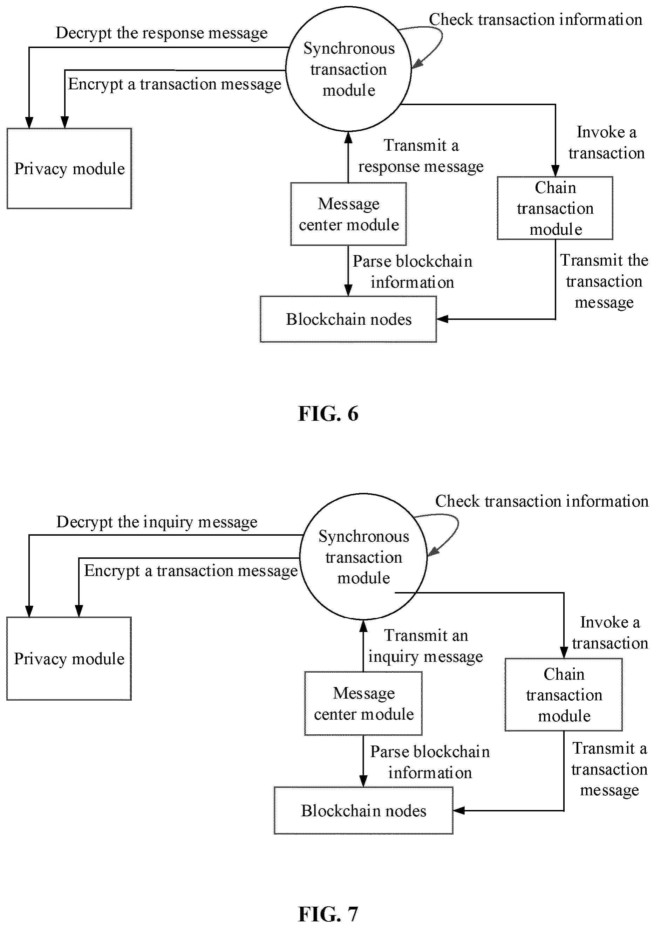

Reference is made to FIG. 6, which shows a process of PVP transaction performed at a side of the transaction initiator node. As an example, the transaction initiator node parses the blockchain information using its message center module to obtain the transaction response and transmits the transaction response to its synchronous transaction module. The synchronous transaction module requests the privacy module to decrypt the response message using the private key of the transaction initiator node. When the response message indicates that the target transaction object agrees to execute the transaction, the transaction initiator node transmits the first transaction message to the blockchain using its chain transaction module and invokes the smart contract on the blockchain to execute the current transaction. Thereby, the first transaction event is generated.

**In** step S205, the transaction recipient node receives the first transaction event, invokes the smart contract on the blockchain to execute the current transaction and generate a second transaction event.

The second transaction event indicates that the transaction recipient node has invoked the smart contract to execute the current transaction.

**In** an embodiment, the transaction recipient node transmits a second transaction message to the blockchain and invokes the smart contract on the blockchain to execute the current transaction. Thereby, the second transaction event is generated. The second transaction message may comprise the content of the current transaction encrypted using a public key of a supervisor. Since the transaction recipient node has received the first transaction event, it can determine that the current transaction has been completed.

In some embodiments, the transaction recipient node transmitting the second transaction message to the blockchain and invoking the smart contract on the blockchain to execute the current transaction and generate the second transaction event comprises following sub-steps. The transaction recipient node performs compliance verification on the second transaction message (e.g., on the transaction amount of both parties, an exchange rate, or the like) using the smart contract and a zero-knowledge circuit. The transaction recipient node generates the second transaction event when the second transaction message passes the compliance verification.

Reference is made to FIG. 7, which shows a process of PVP transaction performed at a side of the transaction recipient node. As an example, the transaction recipient node checks whether the content of the transaction request is correct and generates the response message indicating consent on the transaction when the content is correct. Moreover, the transaction recipient node transmits the second transaction message to the blockchain using its chain transaction module and invokes the smart contract on the blockchain to execute the current transaction. Thereby, the second transaction event is generated.

Embodiments of the present disclosure achieve at least following beneficial effects. The transaction initiator node transmits the transaction request for the current transaction to the blockchain for soliciting confirmation on whether the transaction recipient node agrees to execute the current transaction. Then, the transaction initiator node obtains from the blockchain the transaction response transmitted by the transaction recipient node. When the transaction response indicates that the transaction recipient node agrees to execute the current transaction, the transaction initiator node invokes the smart contract on the blockchain to execute the current transaction, such that the first transaction event is generated. The first transaction event indicates that the transaction initiator node has invoked the smart contract to execute the current transaction. The transaction initiator node determines that the current transaction is completed, when it determines that the second transaction event is generated. The second transaction event is generated by the transaction recipient node through invoking the smart contract on the blockchain to execute the current transaction. The second transaction event indicates that the transaction recipient node has invoked the smart contract to execute the current transaction. The transaction initiator node would not determine that the current transaction is completed until: it invokes the smart contract for executing the transaction and generates the first transaction event, and it confirms that the transaction recipient node also invokes the smart contract for executing the transaction and generates the second transaction event. Hence, it is ensured that both parties of the transaction invoke the smart contract to execute the transaction, and issues due to the settlement lag in related art are addressed.

The completion of a transaction is determined only when both the transaction initiator node and the transaction recipient node have invoked the smart contract to execute the transaction. That is, when the above condition is met, the blockchain transaction system executes the smart contract to perform synchronous transfer between the first account address of the transaction initiator node and the third account address of the transaction recipient node. That is, the first currency of the first transaction amount is transferred to the third account address of the transaction recipient node, and the second currency of the second transaction amount is transferred to the first account address of the transaction initiator node.

In some embodiments, the transaction initiator node transmits the first transaction message to the blockchain, such that a supervisor node can query or store the first transaction message.

Similarly, the transaction recipient node may transmit the second transaction message to the blockchain such that a supervisor node can query or store the second transaction message. Content of the first transaction message may be identical to content of the second transaction message. The two messages differ in that the first transaction message is transmitted from the transaction initiator node while the second transaction message is transmitted from the transaction recipient node. Generally, the supervisor for the transaction initiator node is different from that for the transaction recipient node.

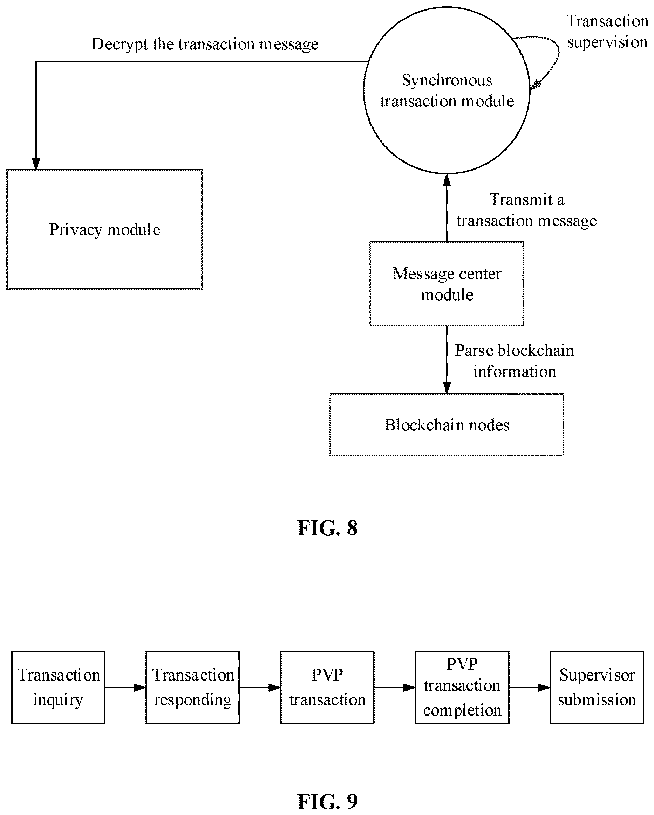

Reference is made to FIG. 8, which shows a process of supervision on a PVP transaction, which is performed by a supervisor node. The supervisor node obtains a PVP transaction message (that is, the first transaction message or the second transaction message) from blockchain node(s) via its message center module. The supervisor node may decrypt the PVP transaction message using its encryption key to obtain the first transaction message or the second transaction message and then store the first transaction message or the second transaction message in a database.

Reference is made to FIG. 9. Herein a complete and efficient method for blockchainbased synchronized settlement is implemented through transaction inquiry, transaction responding, PVP transaction, completion of PVP transaction, and supervisor submission. Before the transaction starts, the initiator inquires a target recipient about the transaction. After receiving a response indicating consent of the target recipient, the initiator invokes the smart contract for executing the transaction, which forms a basis for the synchronized settlement. Additionally, the natural decentralized structure of the blockchain is utilized to address the single point of failure in the system. The smart contract is invoked to execute the transaction after the transaction messages of the two parties are received and the transaction messages of the two parties match each other. Hence, it is ensured that the payment/expenses of both parties are transferred at the same time. Herein privacy protection techniques such as asymmetric encryption and pseudonym mechanisms may be introduced in the transaction process, so that the privacy of both parties can be protected under supervision.

Hereinabove schemes according to embodiments of the present disclosure are illustrated substantially from a perspective of methods. A cross-border payment apparatus or an electronic device may comprise hardware structures and/or software modules for implementing the above functions. Those skilled in the art can appreciate that embodiments of the present disclosure may be implemented in hardware or a combination of hardware and computer software in conjunction of units and algorithm steps described in the foregoing embodiments. Whether a function is implemented by hardware solely or by hardware instructed by computer software depends on a specific application and a specific design constraint on a scheme. Those skilled in the art may use different means to implement the above functions in each application scenario, and these means shall not be considered fall beyond a scope of of the present disclosure.

The cross-border payment device or the electronic device may be divided into functional modules according to the foregoing method embodiments. As an example, the cross-border payment device or the electronic device may comprise functional modules corresponding to the functional divisions respectively, or two or more function divisions may be integrated in one module. The integrated module may be implemented in hardware or as a software functional module. Herein the division of modules is schematic and is merely according to logical functions, and the division may be in other forms in practice.

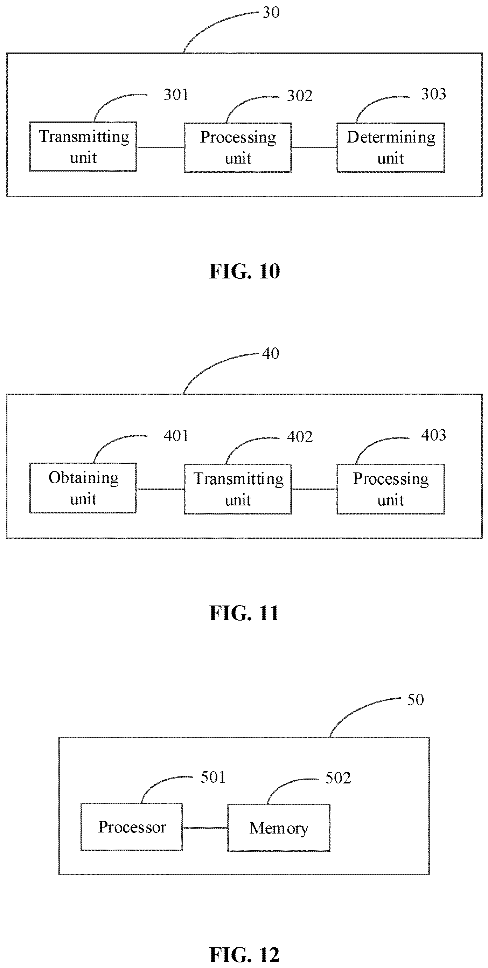

Reference is made to FIG. 10, which is a block diagram of a transaction apparatus according to an embodiment of the present disclosure. The transaction apparatus 30 is applicable to a transaction initiator node. The transaction apparatus 30 comprises a transmitting unit 301, a processing unit 302, and a determining unit 303.

The transmitting unit 301 is configured for transmitting a transaction request for a current transaction to a blockchain, where the transaction request is for soliciting confirmation on whether a transaction recipient node agrees to execute the current transaction. The processing unit 302 is configured for obtaining a transaction response transmitted by the transaction recipient node and, in response to the transaction response indicating that the transaction recipient node agrees to execute the current transaction, invoking a smart contract on the blockchain to execute the current transaction and generate a first transaction event, where the first transaction event indicates that the transaction initiator node has invoked the smart contract to execute the current transaction. The determining unit 303 is configured for determining that the current transaction is completed, in response to determining that a second transaction event is generated, where the second transaction event is generated by the transaction recipient node through invoking the smart contract on the blockchain to execute the current transaction, and the second transaction event indicates that the transaction recipient node has invoked the smart contract to execute the current transaction.

In an embodiment, the transaction request comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node. The transmitting unit is configured for: obtaining a public key of the transaction recipient node; and encrypting, by the transaction initiator node, the transaction request using the public key of the transaction recipient node; and transmitting, by the transaction initiator node, the encrypted transaction request to the blockchain.

In an embodiment, the first account address of the transaction initiator node is calculated through a pseudonymization algorithm.

In an embodiment, the transaction response comprises at least one of: the first account address of the transaction initiator node, a third account address of the transaction recipient node, the first transaction amount transferred from the account address of the transaction initiator node, the second transaction amount transferred from the account address of the transaction recipient node, the first currency of the transaction initiator node, or the second currency of the transaction recipient node. The transaction response is transmitted to the blockchain from the transaction recipient node after being encrypted by the transaction recipient node using a public key of the transaction initiator node.

In an embodiment, the third account address of the transaction recipient node is calculated through a pseudonymization algorithm.

In an embodiment, the processing unit 302 is further configured for: obtaining, from the blockchain, the transaction response transmitted by the transaction recipient node; and decrypting the transaction response using a private key of the transaction initiator node to determine whether the transaction recipient node agrees to execute the current transaction.

In an embodiment, the processing unit 302 is configured for: transmitting a first transaction message to the blockchain; and invoking the smart contract on the blockchain to execute the current transaction and generate the first transaction event. The first transaction message comprises content of the current transaction, the content is encrypted using a public key of a supervisor node, and the transaction initiator node transmits the first transaction message to the blockchain to enable the supervisor node to query or store the first transaction message.

In an embodiment, the processing unit 302 is configured for: performing compliance verification on the first transaction message using the smart contract and a zero-knowledge circuit; and generating the first transaction event in response to the first transaction message passing the compliance verification.

Reference is made to FIG. 11, which is a block diagram of a transaction apparatus according to another embodiment of the present disclosure. The transaction apparatus 40 is applicable to a transaction recipient node. The transaction apparatus 40 comprises an obtaining unit 401, a transmitting unit 402, and a processing unit 403.

The obtaining unit 401 is configured for obtaining, from a blockchain, a transaction request transmitted by a transaction initiator node, where the transaction request is for soliciting confirmation on whether the transaction recipient node agrees to execute a current transaction. The transmitting unit 402 is configured for transmitting a transaction response to the blockchain, in response to the transaction recipient node agreeing to execute the current transaction. The obtaining unit 401 is further configured for receiving first transaction event, where the first transaction event is generated by the transaction initiator node in response to the transaction response through invoking a smart contract on the blockchain to execute the current transaction, and the first transaction event indicates that the transaction initiator node has invoked the smart contract to execute the current transaction. The processing unit 403 is configured for invoking the smart contract on the blockchain to execute the current transaction and generate a second transaction event, where the second transaction event indicates that the transaction recipient node has invoked the smart contract to execute the current transaction.

In an embodiment, the processing unit 403 is further configured for: decrypting the transaction request using a private key of the transaction recipient node to obtain content of the current transaction, where the content of the current transaction comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node; checking whether the content of the current transaction is correct; generating the transaction response in response to the content of the current transaction being correct, where the transaction response indicates that the transaction recipient node agrees to execute the current transaction; and transmitting the transaction response to the blockchain.

In an embodiment, the first account address of the transaction initiator node is calculated through a pseudonymization algorithm.

In an embodiment, the transaction response comprises at least one of: the first account address of the transaction initiator node, a third account address of the transaction recipient node, the first transaction amount transferred from the account address of the transaction initiator node, the second transaction amount transferred from the account address of the transaction recipient node, the first currency of the transaction initiator node, or the second currency of the transaction recipient node. The transmitting unit is configured for: encrypting the transaction response using a public key of the transaction initiator node; and transmitting the encrypted transaction response to the blockchain.

In an embodiment, the third account address of the transaction recipient node is calculated through a pseudonymization algorithm.

In an embodiment, the processing unit 403 is configured for: transmitting a second transaction message to the blockchain; and invoking the smart contract on the blockchain to execute the current transaction and generate the second transaction event. The second transaction message comprises content of the current transaction, and the content is encrypted using a public key of a supervisor node. The transaction recipient node transmits the second transaction message to the blockchain to enable the supervisor node to query or store the second transaction message.

In an embodiment, the processing unit 403 is configured for: performing compliance verification on the second transaction message using the smart contract and a zero-knowledge circuit; and generating the second transaction event in response to the second transaction message passing the compliance verification.

Reference is made to FIG. 12, which is a block diagram of an electronic device according to an exemplary embodiment. The electronic device 50 comprises, but is not limited to, a processor 501 and a memory 502.

The memory 502 is configured for storing executable instructions in the processor 501. The processor 501 is configured for executing the instructions to implement the transaction method according to any foregoing embodiment.

The electronic device is not limited to the structure of as shown in FIG.12. The electronic device may comprise more or fewer components than the structure as depicted in FIG. 12, some components as depicted in FIG. 12 may be combined, or some different components may be deployed.

The processor 501 is a control center of the electronic device and is connected to various parts of the electronic device via various interfaces and lines. The software program and/or module stored in the memory 502 may be executed, and data stored in the memory 502 may be invoked, such that the processor 501 performs various functions of the electronic device and performs data processing. Thereby, the processor 501 monitors the whole electronic device. The processor 501 may comprise one or more processing units. In some embodiments, an application processor and a modem processor may be integrated into the processor 501. The application processor is mainly configured for processing an operating system, a user interface, an application program, or the like. The modem processor is mainly configured for handling wireless communication. The modem processor may be integrated into the processor 501.

The memory 502 may be configured for storing software programs as well as various data. The memory 502 may comprise a program storage region and a data storage region, where the program storage region stores an operating system, an application required by the at least one function, or the like. In addition, the memory 502 may include a high-speed random-access memory and a non-volatile memory, e.g., at least one magnetic disk storage device, at least one flash memory device, or another non-volatile solid-state storage device.

A computer-readable storage medium storing instructions, for example, a memory 502 storing instructions, is further provided according to an embodiment of the present disclosure. The instructions may be executed by a processor 501 of an electronic device 50 to implement any foregoing transaction method.

In practice, the transmitting unit 301, the processing unit 302, and the determining unit 303 in the transaction apparatus 30, and the obtaining unit 401, the transmitting unit 402, and the processing unit 403 in the transaction apparatus 40 may be implemented by the processor 501 through invoking a computer program stored in the memory 502 as shown in FIG. 12. A specific process may refer to the description of the transaction method in the foregoing embodiments and will not be repeated herein.

In an embodiment, the computer-readable storage medium may be a non-transitory computer-readable storage medium. For example, the non-transitory computer-readable storage medium is a read-only memory (ROM), a random-access memory (RAM), a CD-ROM, a magnetic tape, a floppy disk, an optical data storage device, or the like.

In an embodiment, a computer program product comprising one or more instructions is provided according to an embodiment of the present disclosure. The one or more instructions are executable by the processor 501 of the electronic device 50 to implement the transaction method according to the foregoing embodiments.

When the instructions in the computer-readable storage medium or one or more instructions in the computer program product are executed by the processor 501 of the electronic device 50, each process of the above-described embodiment of the transaction method may be implemented, and the same technical effects achieved by the foregoing transaction method can also be achieved. The process and the effects would not be repeated herein for the sake of brevity.

For the sake of convenience and conciseness, the division of functional units and modules is illustrated as an example. In practice, the functions may be allocated to different functional modules on requirement. That is, an internal structure of the apparatus may comprise different functional modules to implement all or part of the functions as described above.

The apparatuses and methods disclosed in embodiments of the present disclosure may be implemented in other manners. The embodiments of the apparatus described above are only illustrative. For example, the division of the modules or units is only a logical function division, and there may be other division manners in practice. For example, multiple units or components may be combined or integrated into another apparatus, or some features may be omitted or not implemented. In addition, indirect or direct couplings or communication connections as depicted or discussed may be couplings or communication connections implemented through some interfaces, apparatuses, or units, and they may be electrical, mechanical, or in other forms.

The units described as separate components may be or may not be physically separated. The components shown as units may be one or more physical units. That is, the components may be located at the same location or may be distributed among multiple locations. Some or all of the units may be selected according to actual requirements to achieve an objective of an embodiment.

In addition, the functional units in various embodiments of the present disclosure may be integrated into one processor, or each unit may be physically separate from other units, or two or more units may be integrated as a single unit. The integrated units may be implemented in hardware or as a software functional unit.

The integrated unit may be implemented as a software functional unit and may be embodied as an independent product for sale or usage. In such case, the integrated unit may be stored in a readable storage medium. All or a part of the technical solutions of the present disclosure that essentially or partially contribute over the related part may be embodied as a software product. The computer software product is stored in a storage medium and comprises several instructions that enable a device (a microcomputer, a chip, or the like) or a processor to execute all or part of the steps of the method in various embodiments of the present disclosure. The storage medium includes a U disk, a removable hard disk, a ROM, a RAM, a magnetic disk, an optical disk, or another medium that can store program codes.

Hereinabove are only specific implementations of the present disclosure, and the protection scope of the present disclosure is not limited thereto. Modifications or substitutions made within the technical scope of the present disclosure shall fall within the protection scope of the present disclosure. Therefore, the protection scope of the present disclosure shall be subject to the protection scope of the claims.

### Industrial Applicability

Schemes in embodiments of the present disclosure can be applied to the technical field of blockchains. The transaction initiator node transmits the transaction request for the current transaction to the blockchain for soliciting confirmation on whether the transaction recipient node agrees to execute the current transaction. Then, the transaction initiator node obtains from the blockchain the transaction response transmitted by the transaction recipient node. When the transaction response indicates that the transaction recipient node agrees to execute the current transaction, the transaction initiator node invokes the smart contract on the blockchain to execute the current transaction, such that the first transaction event is generated. The first transaction event indicates that the transaction initiator node has invoked the smart contract to execute the current transaction. The transaction initiator node determines that the current transaction is completed, when it determines that the second transaction event is generated. The second transaction event is generated by the transaction recipient node through invoking the smart contract on the blockchain to execute the current transaction. The second transaction event indicates that the transaction recipient node has invoked the smart contract to execute the current transaction. The transaction initiator node would not determine that the current transaction is completed until: it invokes the smart contract for executing the transaction and generates the first transaction event, and it confirms that the transaction recipient node also invokes the smart contract for executing the transaction and generates the second transaction event. Hence, it is ensured that both parties of the transaction invoke the smart contract to execute the transaction, and issues due to the settlement lag in related art are addressed.

## Claims

1. A transaction method, applicable to a transaction initiator node, wherein the transaction method comprises:
transmitting, by the transaction initiator node, a transaction request for a current transaction to a blockchain, wherein the transaction request is for soliciting confirmation on whether a transaction recipient node agrees to execute the current transaction;
obtaining, by the transaction initiator node from the blockchain, a transaction response transmitted by the transaction recipient node;
invoking, by the transaction initiator node, a smart contract on the blockchain to execute the current transaction and generate a first transaction event, in response to the transaction response indicating that the transaction recipient node agrees to execute the current transaction, wherein the first transaction event indicates that the transaction initiator node has invoked the smart contract to execute the current transaction; and
determining, by the transaction initiator node, that the current transaction is completed, in response to determining that a second transaction event is generated, wherein the second transaction event is generated by the transaction recipient node through invoking the smart contract on the blockchain to execute the current transaction, and the second transaction event indicates that the transaction recipient node has invoked the smart contract to execute the current transaction.

2. The transaction method according to claim 1, wherein:
the transaction request comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node; and
transmitting, by the transaction initiator node, the transaction request for the current transaction to the blockchain comprises:
obtaining, by the transaction initiator node, a public key of the transaction recipient node;
encrypting, by the transaction initiator node, the transaction request using the public key of the transaction recipient node; and
transmitting, by the transaction initiator node, the encrypted transaction request to the blockchain.

3. The transaction method according to claim 2, wherein the first account address of the transaction initiator node is calculated through a pseudonymization algorithm.

4. The transaction method according to claim 3, wherein:
the transaction response comprises at least one of: the first account address, a third account address of the transaction recipient node, the first transaction amount, the second transaction amount, the first currency, or the second currency; and
the transaction response is transmitted to the blockchain from the transaction recipient node after being encrypted by the transaction recipient node using a public key of the transaction initiator node.

5. The transaction method according to claim 4, wherein the third account address of the transaction recipient node is calculated through a pseudonymization algorithm.

6. The transaction method according to claim 4, further comprising:
obtaining, by the transaction initiator node from the blockchain, the transaction response transmitted by the transaction recipient node; and
decrypting, by the transaction initiator node, the transaction response using a private key of the transaction initiator node to determine whether the transaction recipient node agrees to execute the current transaction.

7. The transaction method according to claim 1, wherein invoking, by the transaction initiator node, the smart contract on the blockchain to execute the current transaction and generate the first transaction event comprises:
transmitting, by the transaction initiator node, a first transaction message to the blockchain; and
invoking, by the transaction initiator node, the smart contract on the blockchain to execute the current transaction to generate the first transaction event;
wherein the first transaction message comprises content of the current transaction, and the content is encrypted using a public key of a supervisor node; and
wherein the transaction initiator node transmits the first transaction message to the blockchain to enable the supervisor node to query or store the first transaction message.

8. The transaction method according to claim 7, wherein transmitting, by the transaction initiator node, the first transaction message to the blockchain and invoking, by the transaction initiator node, the smart contract on the blockchain to execute the current transaction and generate the first transaction event comprises:
performing, by the transaction initiator node, compliance verification on the first transaction message using the smart contract and a zero-knowledge circuit; and
generating, by the transaction initiator node, the first transaction event in response to the first transaction message passing the compliance verification.

9. A transaction method, appliable to a transaction recipient node, wherein the transaction method comprises:
obtaining, by the transaction recipient node from a blockchain, a transaction request transmitted by a transaction initiator node, wherein the transaction request is for soliciting confirmation on whether the transaction recipient node agrees to execute a current transaction;
transmitting, by the transaction recipient node, a transaction response to the blockchain, in response to the transaction recipient node agreeing to execute the current transaction, wherein the transaction response;
receiving, by the transaction recipient node, a first transaction event, wherein the first transaction event is generated by the transaction initiator node in response to the transaction response through invoking a smart contract on the blockchain to execute the current transaction, and the first transaction event indicates that the transaction initiator node has invoked the smart contract to execute the current transaction; and
invoking, by the transaction recipient node, the smart contract on the blockchain to execute the current transaction and generate a second transaction event, wherein the second transaction event indicates that the transaction recipient node has invoked the smart contract to execute the current transaction.

10. The transaction method according to claim 9, further comprising:
decrypting, by the transaction recipient node, the transaction request using a private key of the transaction recipient node to obtain content of the current transaction, wherein the content of the current transaction comprises at least one of: a first account address of the transaction initiator node, a second account address of the transaction recipient node, a first transaction amount transferred from an account address of the transaction initiator node, a second transaction amount transferred from an account address of the transaction recipient node, first currency utilized by the transaction initiator node, or second currency utilized by the transaction recipient node;
checking, by the transaction recipient node, whether the content of the current transaction is correct;
generating, by the transaction recipient node, the transaction response in response to the content of the current transaction being correct, wherein the transaction response indicates that the transaction recipient node agrees to execute the current transaction; and
transmitting, by the transaction recipient node, the transaction response to the blockchain.

11. The transaction method according to claim 10, wherein the first account address of the transaction initiator node is calculated through a pseudonymization algorithm.

12. The transaction method according to claim 10, wherein:
the transaction response comprises at least one of: the first account address, a third account address of the transaction recipient node, the first transaction amount, the second transaction amount, the first currency of the transaction initiator node, or the second currency of the transaction recipient node; and
transmitting, by the transaction recipient node, the transaction response to the blockchain comprises:
encrypting, by the transaction recipient node, the transaction response using a public key of the transaction initiator node; and
transmitting, by the transaction recipient node, the encrypted transaction response to the blockchain.

13. The transaction method according to claim 12, wherein the third account address of the transaction recipient node is calculated through a pseudonymization algorithm.

14. The transaction method according to claim 9, wherein invoking, by the transaction recipient node, the smart contract on the blockchain to execute the current transaction and generate the second transaction event comprises:
transmitting, by the transaction recipient node, a second transaction message to the blockchain; and
invoking, by the transaction recipient node, the smart contract on the blockchain to execute the current transaction and generate the second transaction event;
wherein the second transaction message comprises content of the current transaction, and the content is encrypted using a public key of a supervisor node; and
wherein the transaction recipient node transmits the second transaction message to the blockchain to enable the supervisor node to query or store the second transaction message.

15. The transaction method according to claim 14, wherein transmitting, by the transaction recipient node, the second transaction message to the blockchain and invoking, by the transaction recipient node, the smart contract on the blockchain to execute the current transaction and generate the second transaction event comprises:
performing, by the transaction recipient node, compliance verification on the second transaction message using the smart contract and a zero-knowledge circuit; and
generating, by the transaction recipient node, the second transaction event in response to the second transaction message passing the compliance verification.

16. A transaction method, applicable to a blockchain transaction system, wherein the blockchain transaction system comprises a transaction initiator node and a transaction recipient node, and the transaction method comprises:
transmitting, by the transaction initiator node, a transaction request for a current transaction to a blockchain, wherein the transaction request is for soliciting confirmation on whether a transaction recipient node agrees to execute the current transaction;
obtaining, by the transaction recipient node, the transaction request from the blockchain;
transmitting, by the transaction recipient node, a transaction response to the blockchain in response to the transaction recipient node agreeing to execute the current transaction;
obtaining, by the transaction initiator node, the transaction response from the blockchain;
invoking, by the transaction initiator node in response to the transaction response indicating that the transaction recipient node agrees to execute the current transaction, a smart contract on the blockchain to execute the current transaction and generate a first transaction event, wherein the first transaction event indicates that the transaction initiator node has invoked the smart contract to execute the current transaction;
receiving, by the transaction recipient node, the first transaction event; and
invoking, by the transaction recipient node, the smart contract on the blockchain to execute the current transaction and generate a second transaction event, wherein the second transaction event indicates that the transaction recipient node has invoked the smart contract to execute the current transaction.

17. The transaction method according to claim 16, further comprising:
executing, by the blockchain transaction system, the smart contract to perform synchronous transaction between a first account address of the transaction initiator node and a third account address of the transaction recipient node, wherein the synchronous transaction comprises transferring first currency of a first transaction amount to the third account address and transferring second currency of a second transaction amount to the first account address.

18. A transaction apparatus, applicable to a transaction initiator node, wherein the transaction apparatus comprises:
a transmitting unit, configured for transmitting a transaction request for a current transaction to a blockchain, wherein the transaction request is for soliciting confirmation on whether a transaction recipient node agrees to execute the current transaction;
a processing unit, configured for obtaining a transaction response transmitted by the transaction recipient node and, in response to the transaction response indicating that the transaction recipient node agrees to execute the current transaction, invoking a smart contract on the blockchain to execute the current transaction and generate a first transaction event, wherein the first transaction event indicates that the transaction initiator node has invoked the smart contract to execute the current transaction; and
a determining unit, configured for determining that the current transaction is completed, in response to determining that a second transaction event is generated, wherein the second transaction event is generated by the transaction recipient node through invoking the smart contract on the blockchain to execute the current transaction, and the second transaction event indicates that the transaction recipient node has invoked the smart contract to execute the current transaction.

19. A transaction apparatus, appliable to a transaction recipient node, wherein the transaction apparatus comprises:
an obtaining unit, configured for obtaining, from a blockchain, a transaction request transmitted by a transaction initiator node, wherein the transaction request is for soliciting confirmation on whether the transaction recipient node agrees to execute a current transaction;
a transmitting unit, configured for transmitting a transaction response to the blockchain, in response to the transaction recipient node agreeing to execute the current transaction, wherein:
the obtaining unit is further configured for receiving first transaction event,
the first transaction event is generated by the transaction initiator node in response to the transaction response through invoking a smart contract on the blockchain to execute the current transaction, and
the first transaction event indicates that the transaction initiator node has invoked the smart contract to execute the current transaction; and
a processing unit, configured for invoking the smart contract on the blockchain to execute the current transaction and generate a second transaction event, wherein the second transaction event indicates that the transaction recipient node has invoked the smart contract to execute the current transaction.

20. An electronic device, comprising a processor and a memory, wherein:
the memory is configured for store instructions executable by the processor, and
the processor is configured for executing the instructions to implement the transaction method according to any one of claims 1 to 15.

21. A computer-readable storage medium, wherein:
when computer-executable instructions stored in the computer-readable storage medium are executed by a processor of an electronic device, the electronic device implements the transaction method according to any one of claims 1 to 15.
